(19) Europäisches Patentamt
European Patent Office
Office européen des brevets

(11) EP 2 751 914 B1

(12) **FASCICULE DE BREVET EUROPEEN**

(45) Date de publication et mention
de la délivrance du brevet:
**18.12.2019 Bulletin 2019/51**

(21) Numéro de dépôt: **12750444.7**

(22) Date de dépôt: **23.07.2012**

(51) Int Cl.:
*H02K 16/04* (2006.01)    *H02P 4/00* (2006.01)

(86) Numéro de dépôt international:
**PCT/FR2012/051739**

(87) Numéro de publication internationale:
**WO 2013/030479 (07.03.2013 Gazette 2013/10)**

(54) **MACHINE ELECTRIQUE TOURNANTE**

ROTIERENDE ELEKTRISCHE MASCHINE

ROTARY ELECTRIC MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.09.2011 FR 1157736**

(43) Date de publication de la demande:
**09.07.2014 Bulletin 2014/28**

(73) Titulaire: **Renault S.A.S.**
**92100 Boulogne-Billancourt (FR)**

(72) Inventeur: **GAY, Sébastien**
**F-78180 Montigny Le Bretonneux (FR)**

(56) Documents cités:
**EP-A2- 1 903 212      WO-A1-03/085807
US-A1- 2004 195 994      US-A1- 2009 033 156**

**Description**

L'invention concerne une machine électrique tournante.

Dans un véhicule électrique, hybride ou à pile à combustible, on utilise comme élément moteur une machine électrique tournante de traction qui comprend un rotor entrainé par un stator. Cette machine électrique tournante est excitée par de nombreuses forces d'excitation composées d'harmoniques utiles et d'harmoniques parasites. Ces harmoniques parasites engendrent des vibrations et des bruits qui peuvent être particulièrement gênants pour le conducteur et les passagers. Ces harmoniques sont de plusieurs types: les harmoniques de bobinage, les harmoniques de denture, les harmoniques de saturation et les harmoniques de modulation de courant. Ces forces d'excitation résultent du fonctionnement normal de la machine et il n'est par conséquent pas possible de les éliminer à la source.

On cherche toutefois à limiter ces nuisances sonores par différents moyens.

Il est connu d'agir sur les excentricités statique et/ou dynamique du moteur, ce qui impose une qualité de construction et d'assemblage qui augmente les performances du moteur mais également son coût de fabrication.

Il est également connu de configurer spécifiquement les bobinages et/ou la denture du moteur afin de générer peu d'harmoniques mais ces solutions sont plus coûteuses et complexes qu'une solution traditionnelle. De plus ces solutions ont un impact négatif sur les performances, la compacité et enfin le coût de la machine.

On cherche donc à réduire les nuisances acoustiques générées par une machine électrique tournante sans augmenter le coût ou la complexité de la machine.

Le document US2009033156 divulgue un procédé et un système pour déterminer un point de fonctionnement optimal et une combinaison de tensions qui minimise les pertes de puissance dans un onduleur double alimentant un moteur.

Le document WO03085807 divulgue un moteur à aimants permanents ou à électro-aimants qui sont excités séquentiellement le long de la périphérie, ou dans un ordre différent.

Parmi toutes les harmoniques générées par les forces d'excitation du moteur, les plus problématiques sont les harmoniques de bobinage et les harmoniques de denture car elles présentent des ordres communs correspondant potentiellement à des modes de vibration du stator.

L'invention propose donc de réduire les nuisances acoustiques générées par une machine électrique tournante et réduire ces harmoniques communes en introduisant une composante aléatoire dans la commande des bobinages du circuit statorique de la machine afin d'étaler le spectre du champ magnétique généré par les bobinages du stator.

Plus particulièrement, la présente invention concerne une machine électrique tournante comprenant au moins :

- un premier circuit statorique apte à entrainer un rotor et comprenant au moins un premier bobinage,
- un premier moyen de commande apte à piloter le premier circuit statorique afin d'entrainer le rotor,
- un deuxième circuit statorique apte à entrainer ledit rotor et comprenant un deuxième bobinage,
- un deuxième moyen de commande apte à piloter le deuxième circuit statorique indépendamment du premier circuit statorique selon une consigne, et
- des moyens de génération pour générer la consigne, ladite consigne comportant une composante aléatoire ou pseudo-aléatoire afin d'étaler le spectre du champ magnétique produit par les premier et deuxième bobinages et réduire les perturbations acoustiques de la machine électrique, les premier et deuxième bobinages étant montés en autotransformateur.

Une telle configuration permet de compenser les effets acoustiques du premier circuit statorique par le deuxième circuit statorique sans influer sur les performances du premier circuit.

Le premier circuit statorique permet ainsi d'entraîner le rotor afin de faire avancer le véhicule, tandis que le deuxième circuit statorique permet de compenser au moins en partie les défauts résultant du fonctionnement de la machine électrique tournante.

En particulier, le premier moyen de commande peut être apte à piloter la machine électrique tournante afin de répondre à un fonctionnement primaire normal.

Par fonctionnement primaire normal on comprend que le premier moyen de commande peut être apte à piloter la machine électrique tournante afin de faire avancer un véhicule, c'est-à-dire de le faire avancer vers l'avant du véhicule ou reculer vers l'arrière du véhicule.

Les premier et deuxième bobinages sont montés en autotransformateur. Le deuxième bobinage est alors une portion du premier bobinage. Cela permet de réduire les coûts de fabrication de la machine.

Dans le cas d'une machine électrique tournante à n phases, le premier circuit statorique comporte n premiers bobinages et le deuxième circuit statorique comprend n deuxièmes bobinages, avec $n \geq 2$. Avantageusement, les moyens de génération (35) génèrent alors n consignes pour le pilotage des n deuxièmes bobinages, les n consignes comprenant des composantes aléatoires ou pseudo-aléatoires différentes.

Avantageusement, la fraction de la composante aléatoire de la ou des consignes est variable.

Avantageusement, l'un au moins des circuits statoriques est de forte puissance et l'un au moins des circuits statoriques est de faible puissance.

Une telle configuration peut notamment permettre de compenser un défaut sur le circuit de puissance par un pilotage adapté du ou des circuits de basse puissance.

Par basse puissance on comprendra que la valeur de tension pourra aller de 5 Volts à 60 Volts, avantageusement de 10 Volts à 20 Volts et plus particulièrement de 12 Volts à 16 Volts.

Par haute puissance on comprendra que la valeur de tension pourra aller de 100 Volts à 500 Volts, avantageusement de 200 Volts à 400 Volts et plus particulièrement de 250 Volts à 400 Volts.

En particulier, le deuxième circuit statorique peut alimenter un circuit en basse tension continue, par exemple en 14 Volts continu.

Le deuxième circuit statorique convertit ainsi une partie de l'énergie magnétique de la machine en une énergie électrique, laquelle alimente le circuit en 14 Volts continu.

Avantageusement, le circuit 14 Volts continu peut permettre d'alimenter un circuit de bord d'un véhicule et/ou un moyen de stockage d'énergie.

En particulier, le moyen de stockage d'énergie peut comprendre une batterie ou un condensateur.

Le moyen de stockage d'énergie peut notamment permettre d'alimenter le deuxième circuit statorique.

Ainsi, il n'est plus forcément nécessaire de prévoir un convertisseur continu-continu comme dans l'art antérieur.

En particulier, la machine électrique tournante peut comprendre un premier circuit de puissance relié au premier circuit statorique, le premier circuit de puissance permettant de convertir une tension continue en une tension alternative.

Avantageusement, le premier circuit de puissance peut comprendre un onduleur.

Avantageusement, la tension continue peut être une haute tension. En particulier, la tension peut provenir d'une ou de plusieurs batterie(s) haute tension.

En particulier, l'onduleur peut permettre de convertir une tension continue comprise entre sensiblement 200 et 400 V en une tension alternative comprise entre sensiblement 90 V et 180 V.

En particulier, la machine électrique tournante peut également comprendre un deuxième circuit de puissance relié au deuxième circuit statorique, le deuxième circuit de puissance permettant de convertir une tension alternative en une tension continue.

L'utilisation du deuxième circuit de puissance en tant que convertisseur peut notamment permettre de ne pas utiliser un hacheur et donc de réduire le coût du système d'alimentation en énergie électrique du véhicule.

Avantageusement, le deuxième circuit de puissance peut être un convertisseur.

En particulier, le convertisseur peut permettre de convertir une tension alternative comprise entre sensiblement O Volt et 60 Volts en une tension continue de sensiblement 14 Volts.

L'invention concerne également un véhicule électrique comprenant au moins une machine électrique tournante tel que décrite précédemment.

L'invention sera mieux comprise, et d'autres buts, détails, caractéristiques et avantages apparaîtront plus clairement au cours de la description explicative détaillée qui va suivre, en se référant ci-dessous aux dessins annexés, parmi lesquels:

- la figure 1 est un schéma électrique simplifié d'un véhicule électrique selon l'art antérieur;
- la figure 2 est un schéma électrique simplifié d'un exemple de véhicule selon un mode de réalisation de l'invention.

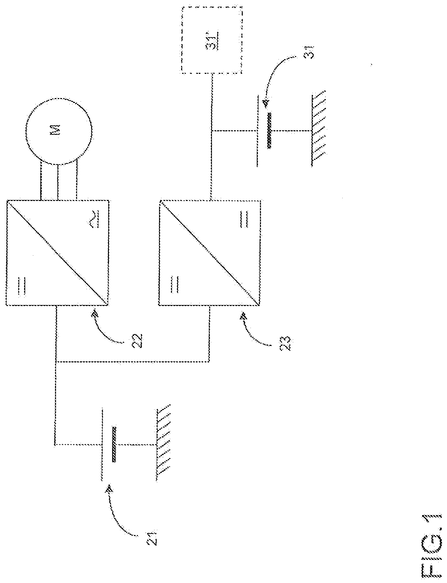

La figure 1 représente une architecture classique du circuit d'alimentation électrique d'un véhicule électrique.

Le circuit d'alimentation de la figure 1 comprend une batterie haute tension 21 qui alimente d'une part un moteur électrique M permettant l'entrainement du véhicule et d'autre part l'alimentation du réseau de bord 31' du véhicule et d'une batterie basse tension 31.

L'énergie de la batterie haute tension 21 traverse au préalable un onduleur 22 avant d'alimenter le moteur électrique M. L'onduleur 22 permet de convertir la tension continue de la batterie haute tension 21 en une tension alternative.

L'énergie de la batterie haute tension 21 traverse également au préalable un convertisseur continu-continu 23 avant d'alimenter le réseau de bord 31' et la batterie basse tension 31.

La tension de la batterie haute tension 21 est généralement comprise entre 200 V et 400 V et permet généralement d'alimenter le moteur avec une tension alternative comprise entre 80 Volts et 180 Volts.

La tension du réseau de bord 31' et de la batterie 31 est généralement de l'ordre de 14 Volts.

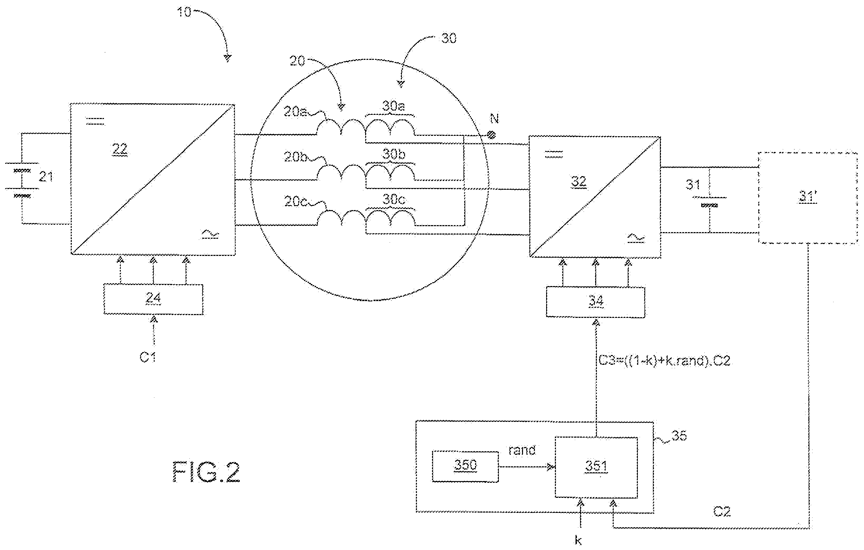

La figure 2 représente un exemple de schéma de principe selon un mode de réalisation de l'invention appliqué à un véhicule électrique.

Une batterie haute tension 21 génère une tension continue de l'ordre de 400 Volts. L'énergie de la batterie haute tension 21 passe par un convertisseur 22 qui permet de transformer la tension continue de 400 V en une tension alternative alimentant un premier circuit statorique 20. Ce premier circuit statorique 20 comprend un ou plusieurs bobinages de stator, entrainant un rotor d'un moteur électrique. L'énergie électrique est ainsi convertie en énergie mécanique permettant d'entrainer le véhicule.

Le convertisseur 22 est piloté par un dispositif de commande 24 qui agit sur la fréquence du convertisseur 22 et donc sur la vitesse du rotor. Le dispositif de commande 24 est par exemple directement relié à l'accélérateur du véhicule afin de répondre à une consigne CI proportionnelle aux sollicitations d'un utilisateur.

La figure 2 illustre le cas d'une machine à 3 phases. A cet effet, le convertisseur 22 comporte trois sorties délivrant des tensions déphasées les unes par rapport aux autres de 120° et le circuit statorique 20 comprend trois bobinages 20A, 20B et 20C, disposées entre les trois sorties du convertisseur et le point neutre N de la machine.

La rotation du rotor permet de générer une tension alternative par l'intermédiaire d'un deuxième circuit statorique 30. Cette tension permet d'alimenter le réseau de bord 31' d'un véhicule par l'intermédiaire d'un convertisseur 32.

Cette tension peut également permettre de recharger un moyen de stockage d'énergie 31, par exemple une batterie ou un condensateur.

Ce moyen de stockage d'énergie 31 est utilisé d'une part pour l'alimentation du réseau de bord 31' du véhicule et d'autre part pour injecter une tension vers le deuxième circuit statorique 30.

Le convertisseur 32 est piloté par un dispositif de commande 34 qui génère un signal de commande représentatif d'une consigne C3 générée par des moyens 35. Les moyens 35 génèrent la consigne C3 à partir d'une consigne C2 proportionnelle aux sollicitations du réseau de bord 31'. Les moyens 35 ont pour fonction d'introduire une composante pseudo-aléatoire ou aléatoire dans la consigne fournie au circuit de commande 34.

Les moyens 35 génère la consigne C3 telle que

$$C3 = \big((1 - k) + k \cdot \text{rand}\big) \cdot C2 \qquad\qquad (1)$$

Où: - C2 représente la valeur de consigne provenant du réseau de bord 31',

- rand est une variable aléatoire ou pseudo-aléatoire comprise entre -1 et 1, et
- k est un paramètre déterminant la fraction de C2 à laquelle est appliquée la variable aléatoire.

Le paramètre k est compris entre 0 et 1.

La variable rand varie régulièrement par exemple à la fréquence de hachage du convertisseur 32.

Le paramètre k permet de restreindre l'intervalle de variation de la consigne. Ainsi, k=0 équivaut à ne pas appliquer de variable aléatoire et k=1 équivaut à une variation aléatoire sur la totalité de la consigne. Pour ne pas perturber la fonction primaire du second circuit statorique qui est d'alimenter le moyen de stockage d'énergie 31, il n'est pas souhaitable d'appliquer une variation aléatoire sur la totalité de la consigne. C'est pourquoi, k est avantageusement inférieur à 0,2 et de préférence entre 0 et 0,1.

Avantageusement, ce paramètre k varie en fonction des phases de fonctionnement du véhicule. De préférence, le paramètre k diminue à mesure que la vitesse du véhicule diminue.

Les moyens 35 comporte un générateur 350 de valeurs aléatoires ou pseudo-aléatoires délivrant la variable rand et un bloc de transformation 351 générant la consigne C3 à partir de C2, rand et k. La consigne C3 est transmise au circuit de commande 34 pour piloter le convertisseur 32.

Le convertisseur 32 peut alors être utilisé en onduleur ou en redresseur.

Le convertisseur 32 fonctionne en onduleur ou en redresseur suivant l'harmonique considérée. Ainsi, le convertisseur 32 pourra fonctionner en redresseur sur certaines harmoniques et ainsi tirer de l'énergie du deuxième circuit statorique et la convertir en courant continu qui sera stocké dans le moyen de stockage d'énergie 31. Simultanément, le convertisseur 32 pourra fonctionner en mode onduleur sur certaines autres harmoniques. Ainsi, le convertisseur 32 tirera du courant continu du moyen de stockage d'énergie 31 pour l'envoyer dans le second circuit statorique 30 sous forme de courant alternatif aux fréquences des harmoniques considérés.

Le moyen de stockage d'énergie 31 peut-être en particulier une batterie électrochimique ou un condensateur double couche, encore appelé super condensateur, permettant du subvenir au besoin moyen en énergie du réseau de bord 31' et ce en dépit d'une puissance instantanée fluctuante dépendant de l'utilisation du convertisseur 32 en onduleur ou en redresseur.

Les bobinages du deuxième circuit statorique 30 et les bobinages du premier circuit statorique 20 sont montés en autotransformateur tel qu'illustré à la figure 2. Dans cette figure, le deuxième circuit statorique comprend trois bobinages 30a, 30b et 30c, soit un pour chaque phase de la machine, qui correspondent à des portions des bobinages 20a, 20b, 20c du premier circuit statorique (montage en autotransformateur). Ceci permet de réduire les couts de fabrication de la machine.

Les trois bobinages 30a, 30b et 30c sont pilotés par le circuit de commande 34 et le convertisseur 32 de manière à engendrer les courants suivants:

$$
\begin{cases}
i_a(t) = (1 - k) \cdot I_s \cdot \sin(\omega t) + k \cdot \text{rand}(1) \cdot \sin(\omega t) \\
i_b(t) = (1 - k) \cdot I_s \cdot \sin(\omega t - \dfrac{2\pi}{3}) + k \cdot \text{rand}(2) \cdot \sin(\omega t - \dfrac{2\pi}{3}) \\
i_c(t) = (1 - k) \cdot I_s \cdot \sin(\omega t - \dfrac{4\pi}{3}) + k \cdot \text{rand}(3) \cdot \sin(\omega t - \dfrac{4\pi}{3})
\end{cases}
$$

où: - $i_a(t)$, $i_b(t)$ et $i_c(t)$ désignent respectivement les courants imposés par le convertisseur 32 dans les bobinages 30a, 30b et 30c;

- $I_s \cdot \sin(\omega t)$ est le courant imposé par le convertisseur 32 pour la consigne C2; et
- rand(1), rand(2) et rand(3) sont trois valeurs de la variable aléatoire rand fournies par le générateur de valeurs aléatoires.

Si le neutre N de la machine est relié à celui du convertisseur 32, on peut admettre que la somme des 3 courants $i_a(t)$, $i_b(t)$ et $i_c(t)$ soit non nulle et donc que les 3 valeurs aléatoires rand(1), rand(2) et rand(3) soient strictement indépendantes. Cette méthode a néanmoins l'inconvénient de réduire le rendement de la machine. Sinon, il faut réaliser la condition suivante :

$$
i_a(t) + i_b(t) + i_c(t) = 0
$$

Ce qui équivaut à :

$$
\text{rand}(1) + \text{rand}(2) + \text{rand}(3) = 0 \qquad\qquad (2)
$$

La condition (2) impose que les 3 valeurs aléatoires rand(1), rand(2) et rand(3) ne soient pas strictement indépendantes. La méthode la plus simple pour choisir les valeurs aléatoires dans cette configuration est alors la suivante : générer les valeurs rand(1) et rand(2) avec le générateur 331 et calculer la valeur rand(3) en respectant la condition (2), d'où

$$
\text{rand}(3) = -\text{rand}(1) - \text{rand}(2).
$$

Par ailleurs, la puissance convertie est le produit du courant de chaque phase (avec sa composante aléatoire) et de la force électromotrice sur cette phase. Cette force électromotrice peut être fonction ou non du courant injecté. Tout dépend de la technologie employée pour la machine. Ainsi, pour une machine à aimants de surface, la force électromotrice sera peu influencée par le courant d'excitation alors que l'impact sera maximal dans le cas d'une machine à réluctance. On peut réduire alors cet impact en n'appliquant la variable aléatoire qu'au courant d'armature de la machine.

Les puissances injectées ou extraites (et donc les courants) sur le circuit statorique de la machine ne sont pas identiques sur les phases du deuxième circuit statorique, ce qui correspond à la nécessité d'avoir une composante aléatoire ou pseudo-aléatoire dans la force magnétomotrice. Or, la somme des puissances sur les phases du deuxième circuit statorique est limitée par la puissance que peut fournir le convertisseur 32 (mode moteur ou générateur) . De même que pour les courants, il conviendra peut être de limiter la puissance sur l'une des phases en fonction de la puissance sur les deux autres phases et de la puissance que peut fournir le convertisseur 32.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention, qui est définie par les revendications.

**Revendications**

1. Machine électrique tournante (10) comprenant au moins :

   - un premier circuit statorique (20) apte à entrainer un rotor et comprenant au moins un premier bobinage,
   - un premier moyen de commande (24) apte à piloter le premier circuit statorique (20) afin d'entrainer le rotor,
   - un deuxième circuit statorique (30) apte à entrainer ledit rotor et comprenant un deuxième bobinage,
   - un deuxième moyen de commande (34) apte à piloter le deuxième circuit statorique (30) indépendamment du premier circuit statorique (20) selon une consigne (C3),

   **caractérisée en ce qu'**elle comporte en outre des moyens de génération (35) pour générer la consigne (C3), ladite consigne comportant une composante aléatoire ou pseudo-aléatoire afin d'étaler le spectre du champ magnétique produit par les premier et deuxième bobinages et réduire les perturbations acoustiques de la machine électrique (10), les premier et deuxième bobinages étant montés en autotransformateur.

2. Machine électrique tournante (10) selon la revendication 1, **caractérisée en ce que** le deuxième bobinage est une portion du premier bobinage.

3. Machine électrique tournante (10) selon la revendication 1 ou 2, **caractérisée en ce que** le premier circuit statorique comporte n premiers bobinages et le deuxième circuit statorique comprend n deuxièmes bobinages, avec n>2, et **en ce que** les moyens de génération (35) génèrent n consignes pour le pilotage des n deuxièmes bobinages, les n consignes comprenant des composantes aléatoires ou pseudo-aléatoires différentes.

4. Machine électrique tournante (10) selon l'une quelconque des revendications 1 à 3, **caractérisée en ce que** la fraction (k) de la composante aléatoire dans la consigne est variable.

5. Machine électrique tournante (10) selon l'une quelconque des revendications 1 à 4, **caractérisée en ce que** la fraction (k) de la composante aléatoire dans la consigne est inférieure à 0,2.

6. Machine électrique tournante (10) selon l'une quelconque des revendications 1 à 5, **caractérisée en ce que** l'un au moins des circuits statoriques (20, 30) est de forte puissance et l'un au moins des circuits statoriques est de faible puissance.

7. Machine électrique tournante (10) selon l'une quelconque des revendications 1 à 6, **caractérisée en ce que** le deuxième circuit statorique (30) alimente un circuit en basse tension continue.

8. Machine électrique tournante (10) selon l'une quelconque des revendications 1 à 7, **caractérisée en ce qu'**elle comprend un premier circuit de puissance (22) relié au premier circuit statorique (20), le premier circuit de puissance (22) permettant de convertir une tension continue en une tension alternative.

9. Machine électrique tournante (10) selon l'une quelconque des revendications 1 à 8, **caractérisée en ce qu'**elle comprend un deuxième circuit de puissance (32) relié au deuxième circuit statorique (30), le deuxième circuit de puissance (32) permettant de convertir une tension alternative en une tension continue.

10. Véhicule automobile comprenant au moins une machine électrique tournante selon l'une quelconque des revendications 1 à 9.

**Patentansprüche**

1. Rotierende elektrische Maschine (10), welche wenigstens umfasst:

   - einen ersten Statorkreis (20), der geeignet ist, einen Rotor anzutreiben, und wenigstens eine erste Wicklung umfasst,
   - ein erstes Steuerungsmittel (24), das geeignet ist, den ersten Statorkreis (20) zu steuern, um den Rotor anzutreiben,
   - einen zweiten Statorkreis (30), der geeignet ist, den Rotor anzutreiben, und eine zweite Wicklung umfasst,
   - ein zweites Steuerungsmittel (34), das geeignet ist, den zweiten Statorkreis (30) unabhängig vom ersten Statorkreis (20) gemäß einem Sollwert (C3) zu steuern,

**dadurch gekennzeichnet, dass**
**dadurch gekennzeichnet, dass** sie außerdem Erzeugungsmittel (35) zum Erzeugen des Sollwertes (C3) aufweist, wobei der Sollwert eine zufällige oder pseudozufällige Komponente aufweist, um das Spektrum des von der ersten und der zweiten Wicklung erzeugten Magnetfeldes zu spreizen und die akustischen Störungen der elektrischen Maschine (10) zu reduzieren, wobei die erste und die zweite Wicklung als Spartransformator ausgeführt sind.

2. Rotierende elektrische Maschine (10) nach Anspruch 1, **dadurch gekennzeichnet, dass** die zweite Wicklung ein Abschnitt der ersten Wicklung ist.

3. Rotierende elektrische Maschine (10) nach Anspruch 1 oder 2, **dadurch gekennzeichnet, dass** der erste Statorkreis n erste Wicklungen aufweist und der zweite Statorkreis n zweite Wicklungen umfasst, mit n>2, und dadurch, dass die Erzeugungsmittel (35) n Sollwerte zur Steuerung der n zweiten Wicklungen erzeugen, wobei die n Sollwerte unterschiedliche zufällige oder pseudozufällige Komponenten umfassen.

4. Rotierende elektrische Maschine (10) nach einem der Ansprüche 1 bis 3, **dadurch gekennzeichnet, dass** der Anteil (k) der zufälligen Komponente am Sollwert variabel ist.

5. Rotierende elektrische Maschine (10) nach einem der Ansprüche 1 bis 4, **dadurch gekennzeichnet, dass** der Anteil (k) der zufälligen Komponente am Sollwert kleiner als 0,2 ist.

6. Rotierende elektrische Maschine (10) nach einem der Ansprüche 1 bis 5, **dadurch gekennzeichnet, dass** wenigstens einer der Statorkreise (20, 30) eine hohe Leistung aufweist und wenigstens einer der Statorkreise eine geringe Leistung aufweist.

7. Rotierende elektrische Maschine (10) nach einem der Ansprüche 1 bis 6, **dadurch gekennzeichnet, dass** der zweite Statorkreis (30) einen Niedergleichspannungskreis speist.

8. Rotierende elektrische Maschine (10) nach einem der Ansprüche 1 bis 7, **dadurch gekennzeichnet, dass** sie einen ersten Leistungskreis (22) umfasst, der mit dem ersten Statorkreis (20) verbunden ist, wobei der erste Leistungskreis (22) ermöglicht, eine Gleichspannung in eine Wechselspannung umzuwandeln.

9. Rotierende elektrische Maschine (10) nach einem der Ansprüche 1 bis 8, **dadurch gekennzeichnet, dass** sie einen zweiten Leistungskreis (32) umfasst, der mit dem zweiten Statorkreis (30) verbunden ist, wobei der zweite Leistungskreis (32) ermöglicht, eine Wechselspannung in eine Gleichspannung umzuwandeln.

10. Kraftfahrzeug, welches wenigstens eine rotierende elektrische Maschine nach einem der Ansprüche 1 bis 9 umfasst.

**Claims**

1. Rotary electric machine (10) comprising at least:

   - a first stator circuit (20) capable of driving a rotor and comprising at least one first winding;
   - a first control means (24) capable of driving the first stator winding (20) so as to drive the rotor;
   - a second stator circuit (30) capable of driving said rotor and comprising a second winding;
   - a second control means (34) capable of driving the second stator circuit (30) independently of the first stator circuit (20) according to a setpoint (C3),

   **characterized in that** it further includes generating means (35) for generating the setpoint (C3), said setpoint including a random or pseudorandom component so as to spread the spectrum of the magnetic field produced by the first and second windings and decrease the acoustic interference of the electric machine (10), the first and second windings being connected as an autotransformer.

2. Rotary electric machine (10) according to Claim 1, **characterized in that** the second winding is a portion of the first winding.

3. Rotary electric machine (10) according to Claim 1 or 2, **characterized in that** the first stator circuit includes n first windings and the second stator circuit includes n second windings, where n > 2, and **in that** the generating means (35) generate n setpoints for driving n second windings, the n setpoints comprising different random or pseudorandom components.

4. Rotary electric machine (10) according to any one of Claims 1 to 3, **characterized in that** the fraction (k) of the random component in the setpoint is variable.

5. Rotary electric machine (10) according to any one of Claims 1 to 4, **characterized in that** the fraction (k) of the random component in the setpoint is smaller than 0.2.

6. Rotary electric machine (10) according to any one of Claims 1 to 5, **characterized in that** at least one of the stator circuits (20, 30) is high power and at least one of the stator circuits is low power.

7. Rotary electric machine (10) according to any one of Claims 1 to 6, **characterized in that** the second stator circuit (30) supplies a circuit with DC low voltage.

8. Rotary electric machine (10) according to any one of Claims 1 to 7, **characterized in that** it comprises a first power circuit (22) that is connected to the first stator circuit (20), the first power circuit (22) allowing a DC voltage to be converted into an AC voltage.

9. Rotary electric machine (10) according to any one of Claims 1 to 8, **characterized in that** it comprises a second power circuit (32) that is connected to the second stator circuit (30), the second power circuit (32) allowing an AC voltage to be converted into a DC voltage.

10. Motor vehicle comprising at least one rotary electric machine according to any one of Claims 1 to 9.

FIG.1

FIG.2

$C3=(1-k)+k.rand).C2$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009033156 A
- WO 03085807 A